# EUROPÄISCHE PATENTANMELDUNG

(11) **EP 1 337 119 A1**
(43) Veröffentlichungstag der Anmeldung: **20.08.2003**
(21) Anmeldenummer: 02360068.7
(22) Anmeldetag: 19.02.2002
(51) Int. Cl.: H04Q 7/32

(54) **Netzwerkserver zur Speicherung von SIM-Daten**

(71) Anmelder: ALCATEL, 75008 Paris (FR)
(72) Erfinder: Klumpp, Dieter, Dr., 70193 Stuttgart (DE); Dütting, Kaspar, 70180 Stuttgart (DE)
(74) Vertreter: Rausch, Gabriele, Dr.

(57) **Zusammenfassung**

Die Erfindung betrifft ein Verfahren zur Unterstützung der Kommunikation eines Endgerätes (TE1 bis TE5) über ein Kommunikationsnetz (TKN), das über ein oder mehrere verschiedenartige Zugangsnetze (AN1, AN2) verfügt, sowie einen Netzwerkserver (NETSERV) und ein Endgerät (TE1) zur Durchführung des Verfahrens. Das Endgerät (TE1) stellt einem Teilnehmer (A) eines Netzbetreibers einen Kommunikationsdienst bereit. Es greift auf einen teilnehmerspezifischen Daten- und/ oder Funktionssatz des Teilnehmers (A) zu, mittels dem es sich gegenüber dem Netzbetreiber als Endgerät des Teilnehmers identifiziert und dem Teilnehmer (A) teilnehmerindividualisierte Funktionen bereitstellt. Der teilnehmerspezifische Daten- und/ oder Funktionssatz wird zumindest zum Teil in einem Netzwerkserver (NETSERV) des Netzbetreibers abgespeichert. Das Endgerät (TE1) greift auf den auf dem Netzwerkserver (NETSERV) abgespeicherten Daten- und/ oder Funktionssatz des Teilnehmers (A) oder Teil des Datenund/ oder Funktionssatzes des Teilnehmers (A) zu. Der Netzwerkserver (NETSERV) überprüft die Zugriffsberechtigung des Endgerätes (TE1) auf den auf dem Netzwerkserver abgespeicherten Daten- und/ oder Funktionssatz des Teilnehmers (A) oder Teil des Daten- und/ oder Funktionssatzes des Teilnehmers (A), bevor er den Zugriff auf diesen gestattet.

## Beschreibung

Die Erfindung betrifft ein Verfahren zur Unterstützung der Kommunikation eines Endgerätes über ein Kommunikationsnetz, das über ein oder mehrere verschiedenartige Zugangsnetze (AN1, AN2) verfügt. Die Erfindung betrifft weiter einen Netzwerkserver eines Netzbetreibers und ein Endgerät zur Durchführung des Verfahrens.

Die Erfindung geht von der heute üblichen Verteilung von teilnehmerspezifischen Daten in Mobilfunknetzen aus, die gemäß dem GSM-Standard implementiert sind (GSM = Global System for Mobile Communication).

Hier besteht das Problem, dass Endgeräte personalisiert werden müssen, d. h., dass sie einem Teilnehmer des Kommunikationsnetzes zugeordnet werden müssen. Dies ist nötig, da die Identität eines Teilnehmers nicht einszu-eins mit dem physikalischen Medium übereinstimmt, über das ein Endgerät auf das Kommunikationsnetz zugreift.

Ein GSM Endgerät ist in zwei Teile geteilt. Einen ersten Teil, der die Hardware und die Software enthält, die zur Bereitstellung des GSM-Kommunikationsdienstes benötigt wird. Weiter einen zweiten Teil, der die teilnehmerspezifischen Daten enthält. Dieser zweite Teil wird auch als SIM (Subscriber Identity Modul) bezeichnet und hat entweder die Form einer Smart Card, oder aber einer verkleinerten Smart Card (plug-in SIM).

Die Funktionsweise der SIM wird in dem Standard GSM 11.11. Version 4.21.1, ETSI, Dezember 1999 beschrieben.

Die SIM wird über eine galvanische Verbindung mit dem GSM-Endgerät verbunden. Die SIM enthält teilriehmerspezifische Daten, mittels denen sich ein Endgerät gegenüber einem Netzbetreiber als Endgerät des Teilnehmers (A) identifizieren kann. Daneben ist es möglich, auf der SIM teilnehmerspezifische Telefonnummern oder eine teilnehmerspezifische Netzwahl für Auslands-Aufenthalte zu speichern.

Der Erfindung liegt die Aufgabe zugrunde, die Funktionalität der SIM zu erweitern und eine SIM Funktionalität auch für andersartig ausgestaltete Endgeräte bereitzustellen.

Diese Aufgabe wird gelöst durch ein Verfahren zur Unterstützung der Kommunikation eines Endgerätes über ein Kommunikationsnetz nach der Lehre von Anspruch 1. Diese Aufgabe wird weiter gelöst durch einen Netzwerkserver eines Netzbetreibers zur Unterstützung der Kommunikation eines Endgerätes über ein Kommunikationsnetz nach der Lehre von Anspruch 9. Diese Aufgabe wird weiter gelöst durch ein Endgerät zur Kommunikation über ein Kommunikationsnetz nach der Lehre von Anspruch 20.

Der Erfindung liegt hierbei der Gedanke zugrunde, die Funktionalität der SIM ganz oder teilweise in einen Netzwerkserver zu verlagern.

Dies hat zum einen den Vorteil, dass aufgrund der größeren Leistungsfähigkeit des Netzwerksevers gegenüber der einer SIM Karte eine Vielzahl weiterer Funktionalitäten in die entstehende "virtuelle" SIM integrierbar sind.

Weiter wird hierdurch die SIM Funktionalität weitgehend unabhängig von dem Endgerät, das sie personalisiert. So können eine Vielzahl von unterschiedlichen Endgeräten mit ein und derselben SIM betrieben werden.

Weitere Vorteile ergeben sich dadurch, dass für die im netzseitigen Teil der SIM Funktionalität gespeicherten Daten ein hohes Maß an Datensicherheit bereitgestellt werden kann und dass ein Transfer dieser Daten oder ein Teil dieser Daten auf eine andere "virtuelle" SIM vereinfacht wird.

Weiter ermöglicht dies die Komplexität von Endgeräten zu vereinfachen und diese kostengünstiger anzubieten. Die Notwendigkeit einer zweiten "physikalischen" SIM für ein parallel existierendes Endgerät eines Teilnehmers entfällt, was weiter die Datenkonsistenz verbessert und die Benutzerfreundlichkeit erhöht.

Weitere Vorteile ergeben sich auf Seite des Netzbetreibers. So wird zum einen die Kundenbindung verstärkt und zum anderen der Transfer eines Teilnehmers zu einem anderen Netzbetreiber vereinfacht.

Es ist vorteilhaft, wenn der Netzwerkserver die SIM Funktionalität am POP (point of presence) bereitstellt. Der Netzwerkserver wird in diesem Fall beispielsweise von einem Netzugangsserver eines Internet Service Providers (ISP) gebildet.

Weiter ist es vorteilhaft, teilnehmerspezifische Telefonnummern und Adressen in dem netzseitigen Teil der SIM Funktionalität zu speichern. Auch Funktionen wie die Speicherung, Verwaltung und Steuerung von SMS-Inhalten (SMS = Short Message Service) und Funktionen wie eine SMS Autoreply-Funktion können im netzseitigen Teil der SIM Funktionalität angeordnet werden. Weitere benutzerfreundliche Funktionen, die vorzugsweise im netzseitigen Teil der SIM Funktionalität angeordnet werden, sind die Bereitstellung einer teilnehmerspezifischen Datenbank, die Speicherung von Bookmarks, die Bereistellung einer DRM-Funktionalität (DRM = Digital Right Management System), die Bereitstellung einer Übersetzungsfunktion für Sprache oder Funktionen zur Sprachsteuerung.

Weitere vorteilhafte Ausgestaltungen der Erfindung sind den Unteransprüchen zu entnehmen.

Im folgenden wir die Erfindung anhand mehrerer Ausführungsbeispiele unter Zuhilfenahme beiliegender Zeichnungen beispielhaft erläutert.
- Fig. 1: zeigt ein Blockschaltbild eines Kommunikationssystems mit einem erfindungsgemäßen Netzwerkserver und mit mehreren erfindungsgemäßen Endgeräten.
- Fig. 2: zeigt eine funktionelle Darstellung eines erfindungsgemäßen Netzwerkservers und eines erfindungsgemäßen Endgerätes.

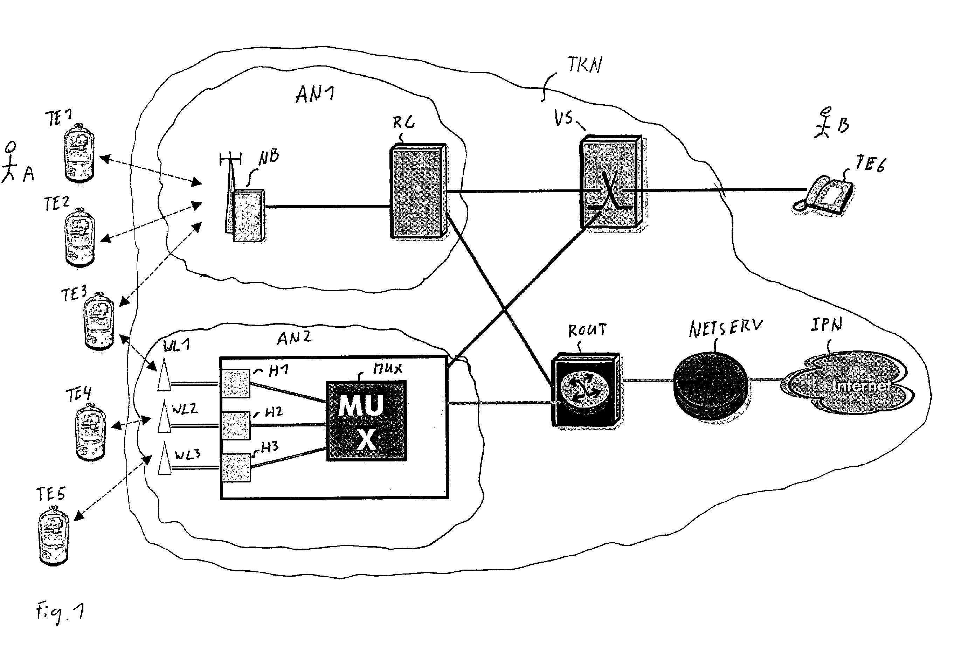

Fig. 1 zeigt ein Kommunikationsnetz TKN und mehrere Endgeräte TE1 bis TE6. Die Endgeräte TE1 bis TE5 sind einem Teilnehmer A zugeordnet und das Endgerät TE6 ist einem Teilnehmer B zugeordnet.

Das Kommunikationsnetz TKN stellt ein Fernsprechnetz dar, das beispielsweise von mehreren ISDN-, PSTN- und Mobilfunknetzen gebildet wird (ISDN = Integrated Services Digital Network, PST = Public Switched Telephone Network). Die Mobilfunknetze sind beispielsweise GSM- oder UMTS-Netze (GSM = Global System for Mobile Communication, UMTS = Universal Mobile Telecommunication System). Es ist jedoch auch möglich, dass das Kommunikationsnetz TKN neben der Sprachkommunikation auch der Daten- und Video- Kommunikation dient. Das Kommunikationsnetz TKN kann somit auch Datennetze umfassen, die beispielsweise basierende auf einem ATM, MAN oder Ethernet Protokoll das IP-Protokoll (ATM = Asynchronous Transfer Mode, MAN= Metropolitan Area Network, IP = Internet Protocol) als Schicht 3 Protokoll verwenden.

Das Kommunikationsnetz TKN nach Fig. 1 ist einem Netzbetreiber zugeordnet. Es ist jedoch auch möglich, dass das Kommunikationsnetz TKN von mehreren Teilnetzen gebildet wird, die unterschiedlichen Netzbetreibern zugeordnet sind.

Von den Netzen, die das Telekommunikationsnetz TKN bilden, sind in Fig. 1 beispielhaft zwei Zugangsnetze AN1 und AN2 und ein Datennetz IPN gezeigt. Weiter zeigt Fig. 1 beispielhaft einige Netzelemente des Kommunikationsnetzes TKN, nämlich eine Vermittlungsstelle VS, einen Router ROUT und einen Netzwerkserver NETSERV. Die Zugangsnetze AN1 und AN2 sind zum einen mit der Vermittlungsstelle VS verbunden und zum anderen über den Router ROUT mit dem Netzwerkserver SERV verbunden.

Zugangsnetze sind Netze, die Endgeräten den Zugang zu dem Kommunikationsnetz TKN ermöglichen und somit über ein oder mehrere Kommunikationsschnittstellen zu Endgeräten verfügen.

Das Zugangsnetz AN1 ist ein GSM-Netz. Von den Netzelementen des Zugangsnetzes AN1 sind in Fig. 1 beispielhaft eine Funkfeststation NB und ein Funknetz-Kontroller RC gezeigt. Bei dem Zugangsnetz AN1 kann es sich aber auch um ein UMTS-Netz handein. Die Funkfeststation NB und der Funknetz-Kontroller RC werden dann von entsprechenden Komponenten des UMTS Netzes gebildet.

Das Zugangsnetz AN1 ist ein Wireless LAN (LAN = Local Area Network). Von den Netzelementen des Zugangsnetzes AN2 sind in Fig. 1 beispielhaft mehrere Funkfeststationen WL1 bis WL3, mehrere HUBs H1 bis H3, und ein Multiplexer MUX gezeigt. Die Funkfeststationen WL1 bis WL3 sind mit den HUBs H1 bis H3 jeweils über Glasfaserkabel oder Kupfer-Leitungen verbunden. Die HUBs H1 bis H3 werden beispielsweise von einem DSLAM Multiplexer (DSLAM = Digital Subscriber Line Access Multiplexer) gebildet und weisen so ein DSL Modem (Digital Subscriber Line) auf, mittels dem sie mit dem Multiplexer MUX kommunizieren. Die HUBs H1 bis H3 und der Multiplexer MUX bilden ein MDF-Netz (MDF = Main Distribution Frame).

Die HUBs H1 bis H3 können auch über ein Kabelnetz mit dem Multiplexer MUX verbunden sein. Weiter ist es natürlich auch möglich, dass die Funkfeststationen WL1 bis WL3 über ein LAN oder ein ATM-Netz mit einem Router verbunden sind, der das Zugangsnetz AN2 mit dem Netz eines ISP Netzbetreibers (ISP = Internet Service Provider) verbindet.

Bei dem Datennetz IPN handelt es sich um das Internet.

Bei der Vermittlungsstelle VS handelt es sich um eine übliche ISDN oder PSTN Vermittlungsstelle. Es ist hierbei auch möglich, dass die Vermittlungsstelle VS die Funktion einer Mobilfunk-Vermittlungsstelle erbringt und somit bei der Vermittlung auf eine VLR und HLR Funktionalität (VLR = Visitor Location Register, HLR = Home Location Register) zugreift.

Der Router ROUT ist mit dem Netzwerkserver NETSERV verbunden. Der Netzwerkserver NETSERV erbringt neben den unten beschrieben Funktionen eines erfindungsgemäßen Netzwerkservers weiter vorzugsweise die Funktion eines Netzzugangsservers eines ISP Netzbetreibers. Der Netzwerkserver NETSERV überprüft hierfür Zugangsberechtigungen, führt Vergebührungsfunktionen durch und ermöglicht Teilnehmern zusammen mit dem Router ROUT den Zugang in das Datennetz IPN. Der Router ROUT und der Netzwerkserver NETSERV bilden so aus logischer Sicht den Netzzugangspunkt (POP = Point of Presence).

Bei den Endgeräten TE1 und TE2 handelt es sich um Endgeräte, die über eine Kommunikationsschnittstelle zur Kommunikation mit dem Zugangsnetz AN1 verfügen. Bei den Endgeräten TE4 und TE5 handelt es sich um Endgeräte, die über eine Kommunikationsschnittstelle zur Kommunikation mit dem Zugangsnetz AN2 verfügen. Bei dem Endgerät TE3 handelt es sich um ein Endgerät, die über eine Kommunikationsschnittstelle zur Kommunikation mit dem Zugangsnetz AN1 und dem Zugangsnetz AN2 verfügt. Die Endgeräte TE1 bis TE5 dienen der Sprachkommunikation und sind in Form eines Handapparatgehäuses ausgestaltet. Mit den Endgeräten TE1 bis TE5 ist vorzugsweise neben der Sprachkommunikation auch eine Datenkommunikation oder Videokommunikation möglich. Weiter ist es möglich, dass die Endgeräte TE1 bis TE5 von einem Computer gebildet werden, der über eine Schnittstellenkarte verfügt, die die jeweilige Kommunikationsschnittstelle unterstützt.

Bei dem Endgerät TE6 handelt es sich um ein Telefon, das mit der Vermittlungsstelle VS verbunden ist.

Der Teilnehmer A ist Teilnehmer eines Netzbetreibers und ist bei diesem Netzbetreiber als Teilnehmer registriert (subscription). Der Teilnehmer A beabsichtig nun, mittels einer seiner Endgeräte TE1 bis TE5, in dem folgenden Ausführungsbeispiel mittels des Endgerätes TE1, über das Kommunikationsnetz TKN und das Endgerät TE6 mit dem Teilnehmer B zu kommunizieren.

Die Endgeräte TE1 bis TE5 des Teilnehmers A stellen dem Teilnehmer A jeweils einen Kommunikationsdienst bereit: Sie ermöglichen eine Kommunikation mit dem Kommunikationsnetz TKN. Weiter greifen die Endgeräte TE1 bis TE5 auf einen teilnehmerspezifischen Daten- und/oder Funktionssatze des Teilnehmers A zu. Dieser Zugriff kann bei der Aktivierung des jeweiligen Endgerätes erfolgen. Vorzugsweise wird dieser Zugriff jedoch immer wieder erfolgen, solange das Endgerät aktiviert ist.

Mittels des teilnehmerspezifischen Daten- und/oder Funktionssatzes identifiziert das jeweils aktivierte der Endgeräte TE1 bis TE5 sich gegenüber dem Netzbetreiber als Endgerät des Teilnehmers. Im weiteren stellt das jeweils aktivierte der Endgeräte TE1 bis TE5 mittels des teilnehmerspezifischen Daten- und/oder Funktionssatzes dem Teilnehmer A teilnehmerindividualisierte Funktionen bereit.

Der teilnehmerspezifische Daten- und/oder Funktionssatz wird hierbei zumindest zum Teil in einem Netzwerkserver, hier dem Netzwerkserver NETSERV abgespeichert. Der Netzwerkserver NETSERV ist ein Netzwerkserver desjenigen Netzbetreibers, bei dem der Teilnehmer A als Teilnehmer registriert ist. Dies bedeutet, dass der Netzwerkserver NETSERV Funktionen für den Netzbetreiber wahrnimmt und somit den Netzbetreiber gegenüber dem zugreifenden Endgerät repräsentiert.

Es ist auch möglich, dass es sich bei dem Netzwerkserver des Netzbetreibers, auf dem der teilnehmerspezifische Daten- und/oder Funktionssatz abgespeichert wird, um einen Netzwerkserver eines Mobilfunknetzes, eines PSTN- oder ISDN-Netzes handelt und es sich bei ihm nicht um den Netzzugangsserver eines ISP-Netzbetreibers handelt.

Das jeweils aktivierte der Endgeräte TE1 bis TE5 greift bei der Erbringung der oben beschriebenen Funktionen nun auf den auf dem Netzwerkserver NETSERV abgespeicherten Daten- und/oder Funktionssatz des Teilnehmers A oder auf den auf dem Netzwerkserver NETSERV abgespeicherten Teil des Daten- und/oder Funktionssatzes des Teilnehmers A zu. Der Netzwerkserver NETSERV überprüft seinerseits die Zugriffsberechtigung eines zugreifenden Endgerätes auf den auf dem Netzwerkserver NETSERV abgespeicherten Daten- und/oder Funktionssatze des Teilnehmers A oder Teil des Daten- und/oder Funktionssatzes des Teilnehmers A. Nur bei einem positiven Ergebnis dieser Überprüfung, d. h. wenn der Netzwerkserver ermittelt, dass das Endgerät zum Zugriff berechtigt ist, gestattet der Netzwerkserver dem Endgerät den Zugriff auf den Datenund/oder Funktionssatz oder den Teil des Daten- und/oder Funktionssatzes des Teilnehmers A.

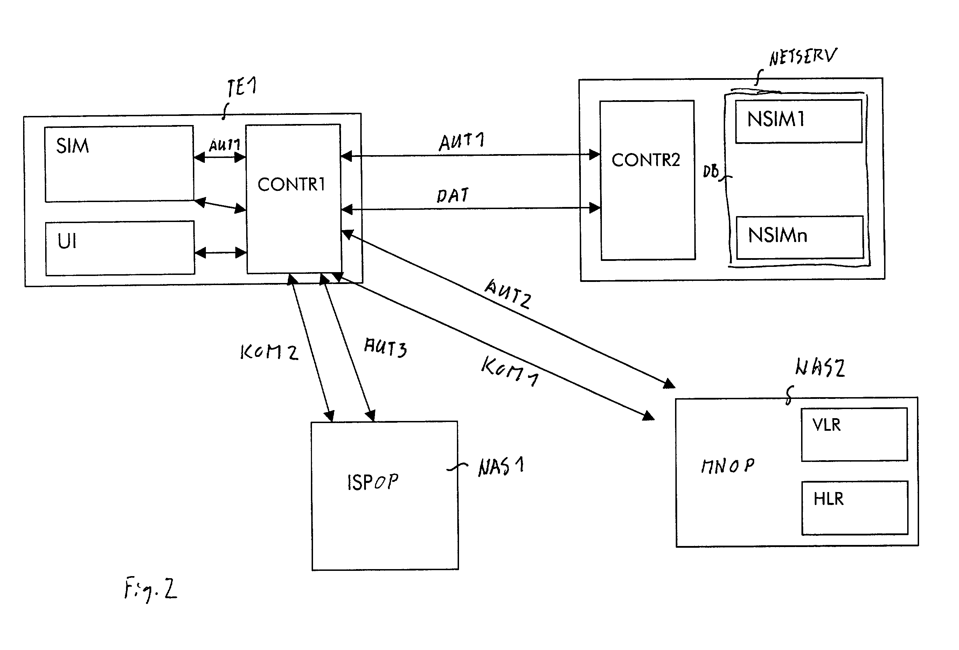

Der detaillierte Aufbau des für die Erfindung relevanten Teils des Endgerätes TE1 und des Netzwerkservers NETSERV wird nun anhand von Fig. 2 verdeutlicht.

Fig. 2 zeigt das Endgerät TE1, den Netzwerkserver NETSERV und zwei Netzzugangsserver NAS1 und NAS2.

Der Netzwerkserver NETSERV wird von ein oder mehreren über ein Kommunikationsmedium miteinander verbundenen Rechner, von einer auf diesen Rechnern aufsetzenden Softwareplattform und von auf dieser Softwareplattform ablaufenden Applikationsprogrammen gebildet, die die Funktionen des Netzwerkservers NETSERV steuern. Weiter verfügt der Netzwerkserver NETSERV über periphere Komponenten, beispielsweise eine Ethernet-Karte, die ihm eine Kommunikation innerhalb des Kommunikationsnetzes TKN ermöglichen.

Aus funktioneller Sicht umfasst der Netzwerkserver NETSERV eine Speichereinheit DB und eine Steuereinheit CONTR2.

Die Speichereinheit DB wird von einer Datenbank gebildet, die auf dem Systemspeicher und den Permanentspeichersystemen des Netzwerkservers NETSERV aufsetzt. Die Steuereinheit CONTR2 wird von ein oder mehreren Applikationsprogrammen des Netzwerkservers NETSERV und von der für ihren Ablauf notwendigen Komponenten der Software- und Hardwareplattform des Netzwerkservers NETSERV gebildet.

Die Speichereinheit NETSERV umfasst einen oder mehrere Speicherbereiche NSIM1 bis NSIMn. In diesen ist jeweils zumindest ein Teil eines teilnehmerspezifische Daten- und/oder Funktionssatze eines Teilnehmers des Netzbetreibers abgespeichert. Der Speicherbereich NSIM1 ist dem Teilnehmer A zugeordnet. Die Speicherbereiche NSIM2 bis NSIMn sind jeweils einem von n-1 weiteren Teilnehmern des Netzbetreibers zugeordnet.

Ein teilnehmerspezifischer Daten- und/oder Funktionssatz kann sowohl teilnehmerspezifische Daten (statische Komponente) als auch teilnehmerspezifische Funktionen (dynamische Komponente) eines Teilnehmers umfassen. Teilnehmerspezifische Funktionen können hierbei entweder von dem einem Teilnehmer zugeordneten Endgerät oder von der Steuereinheit CONTR2 ausgeführt werden. In dem einem Teilnehmer zugeordneten Speicherbereich eines Teilnehmers können somit entweder nur teilnehmerspezifische Daten, nur teilnehmerspezifische Funktionen oder sowohl teilnehmerspezifische Daten als auch teilnehmerspezifische Funktionen abgespeichert sein.

Der teilnehmerspezifische Daten- und/oder Funktionssatz des Teilnehmers A, der zumindest zum Teil in dem Speicherbereich NSIM1 abgespeichert ist, dient dazu, Endgeräte gegenüber dem Netzbetreiber als Endgerät des Teilnehmers A zu identifizieren und dem Teilnehmer A teilnehmerindividualisierte Funktionen bereitzustellen.

Für die Erbringung der Identifizierungsfunktion umfaßt der teilnehmerspezifische Daten- und/oder Funktionssatz teilnehmerspezifische Daten wie Schlüssel, Passwörter oder spezielle Kennungen, aber auch teilnehmerspezifische Identifizierungs-, Authentifizierungs- oder Autorisierungsfunktionen.

Im folgenden werden einige teilnehmerindividualisierte Funktionen erläutert, die mittels der teilnehmerspezifischen Daten und/oder Funktionen des teilnehmerspezifische Daten- und/oder Funktionssatzes des Teilnehmers A bereitgestellt werden können.

Eine einfache teilnehmerindividualisierte Funktion ist das Bereitstellen eines teilnehmerspezifische Adress- und/oder Telefonbuchs. Hierbei ist es besonders vorteilhaft, wenn zur Bereitstellung dieser Funktion in dem Daten- und/oder Funktionssatz des Teilnehmers A oder Teil des Datenund/oder Funktionssatzes des Teilnehmers A, der in der Speichereinheit DB abgespeichert ist, teilnehmerspezifische Adressen und/oder Telefonnummern enthalten sind.

Weiter ist es möglich, eine teilnehmerindividualisierte SMS Funktion (SMS = Short Message Service) bereitzustellen. Hierbei ist es besonders vorteilhaft, wenn zur Bereitstellung dieser Funktion in dem Daten- und/oder Funktionssatz des Teilnehmers A oder Teil des Daten- und/oder Funktionssatzes des Teilnehmers A, der in der Speichereinheit DB abgespeichert ist, teilnehmerspezifische SMS Inhalte und Funktionen zur SMS Steuerung oder Verwaltung enthalten sind. Solche Funktionen sind beispielsweise das Versendung von individuellen SMS Autoreply-Nachrichten oder die Eingabe von SMS mittels einer teilnehmerindividualisierten Spracherkennung.

Weiter ist es möglich, teilnehmerindividualisierte Datenbankfunktionen bereitzustellen. Dem Teilnehmer A wird somit eine teilnehmerspezifische Datenbank zur Verfügung gestellt, deren Inhalte und deren Datenstruktur er individuell bestimmen kann. Hierbei ist es besonders vorteilhaft, wenn zur Bereitstellung dieser Funktion in dem Daten- und/oder Funktionssatz des Teilnehmers A oder Teil des Daten- und/oder Funktionssatzes des Teilnehmers A, der in der Speichereinheit DB abgespeichert ist, die Inhalte und die Datenstruktur der teilnehmerspezifischen Datenbank enthalten sind.

Weiter ist es möglich, dem Teilnehmer A Funktionen für die Speicherung und Verwaltung teilnehmerindividualisierter Bookmarks bereitzustellen, die beispielsweise auf WEB Adressen oder Videotextseiten verweisen. Hierbei ist es besonders vorteilhaft, wenn zur Bereitstellung dieser Funktion in dem Daten- und/oder Funktionssatz des Teilnehmers A oder Teil des Datenund/oder Funktionssatzes des Teilnehmers A, der in der Speichereinheit DB abgespeichert ist, diese teilnehmerspezifischen Bookmarks und eine teilnehmerspezifische Datenstruktur zur Verknüpfung dieser Bookmarks enthalten sind.

Weiter ist es möglich, dass in dem Daten- und/oder Funktionssatz des Teilnehmers A oder Teil des Daten- und/oder Funktionssatzes des Teilnehmers A, der in der Speichereinheit DB abgespeichert ist, DRM-Funktionen (DRM = Digital Right Management System) enthalten sind. Diese Funktionen erbringen zum einen den Schutz von Copyright Rechten, indem sie bei der Übermittlung von Inhalten an ein Endgerät die Einhaltung der mit den Inhalten verknüpften Bedingungen überwachen. Weiter enthalten sie auch Vergebührungsfunktionen für die Vergebührung von solchen Inhalten. Auch diese DRM-Funktionen können teilnehmerindividualisierte Bestandteile enthalten.

Weiter ist es möglich, dass in dem Daten- und/oder Funktionssatz des Teilnehmers A oder Teil des Daten- und/oder Funktionssatzes des Teilnehmers A, der in der Speichereinheit DB abgespeichert ist, Rufnummernportabilitäts-Informationen enthalten sind.

Weiter ist es möglich, dass in dem Daten- und/oder Funktionssatz des Teilnehmers A oder Teil des Daten- und/oder Funktionssatzes des Teilnehmers A, der in der Speichereinheit DB abgespeichert ist, Funktionen zur Sprachübersetzung enthalten sind. Besonders vorteilhaft ist es hierbei, Sprachübersetzungsfunktionen beispielsweise basierend auf künstlicher Intelligenz zu verwenden, die sich adaptiv an den Teilnehmer A anpassen.

Weiter ist es möglich, dass in dem Daten- und/oder Funktionssatz des Teilnehmers A oder Teil des Daten- und/oder Funktionssatzes des Teilnehmers A, der in der Speichereinheit DB abgespeichert ist, Informationen zur Authentisierung des Teilnehmers gegenüber einem oder mehreren Netzbetreibern enthalten sind. Hierdurch ist es möglich, dass die Steuereinheit CONTR2 selbständig eine Authentisierung des Teilnehmers gegenüber ein oder mehreren (Zugangs-) Netzen durchführen kann, die dem Netzbetreiber des Netzwerkservers NETSERV aber auch anderen Netzbetreibern zugeordnet sind.

Die Steuereinheit CONTR2 überprüft die Zugriffsberechtigung eines Endgerätes auf den auf dem Netzwerkserver abgespeicherten Daten- und/oder Funktionssatz des Teilnehmers A oder Teil des Daten- und/oder Funktionssatzes des Teilnehmers A. Nur bei positiver Überprüfung gestattet sie den Zugriff auf den Daten- und/oder Funktionssatz bzw. diesen Teil des Daten- und/oder Funktionssatzes des Teilnehmers A.

Die detaillierte Vorgehensweise bei dieser Überprüfung sowie weitere von der Steuerung CONTR2 durchgeführte Funktionen werden im folgenden bei der Erläuterung der detaillierten Funktionsweise des Endgeräts TE1 geschildert.

Das Endgerät TE1 weist eine Karte SIM, eine Bedieneinheit UI und eine Steureinheit CONTR1 auf.

Bei der Karte SIM handelt es sich um eine Speicherkarte oder eine Prozessorkarte, die über eine lösbare Verbindung in dem Endgerät TE1 angeordnet ist. Die Karte SIM kann damit auch mit anderen der Endgeräte TE1 bis TE5 verbunden werden. Bei der Karte kann es sich beispielsweise um eine SIM-Karte gemäß des oben zitierten Standards GSM 11.11 handeln.

Es ist auch möglich, das die Karte SIM fest mit dem Endgerät TE1 verbunden ist. Weiter ist es auch möglich, auf die Karte SIM zu verzichten.

Die Bedieneinheit UI stellt die Benutzerschnittstelle zu dem Teilnehmer A bereit. Sie besteht beispielsweise aus einem Display, einer Tastatur, einem Mikrophon und einem Lautsprecher. Weiter kann die Bedieneinheit UI weitere Komponenten wie eine Videokamera, einen Trackball oder einen Touchscreen umfassen.

Die Steuereinheit CONTR1 wird von mehreren Hardware-Komponenten und der auf diesen Hardwarekomponenten ablaufenden Software gebildet. Sie umfasst einen Mikroprozessor und Baugruppen, die die Kommunikation mit dem Zugangsnetz AN1 ermöglichen. Die Steuereinheit CONTR1 ist weiter mit der Bedieneinheit UI verbunden und verfügt über eine Schnittstelleinheit, über die die Karte SIM an die Steuereinheit CONTR1 ankoppelbar ist.

Bei dem Ablauf der Software der Steuereinheit CONTR1 auf der Hardware der Steuereinheit CONTR1 werden folgenden Funktionen von der Steuereinheit CONTR1 ausgeführt:

Die Steuereinheit CONTR1 stellt dem Teilnehmer A, der ja wie oben bereits erläutert Teilnehmer eines Netzbetreibers ist, über die Bedieneinheit UI einen Kommunikationsdienst bereit. Ein solcher Kommunikationsdienst besteht beispielsweise in dem Aufbau und der Aufrechterhaltung einer Sprachverbindung zu dem Kommunikationsnetz TKN oder in der Übermittlung und dem Empfang von Daten an bzw. von dem Kommunikationsnetz TKN.

Die Steuereinheit CONTR1 greift weiter auf einen teilnehmerspezifischen Daten- und/oder Funktionssatz des Teilnehmers A zu. Unter Zugriff ist hierbei das Lesen, Schreiben und Löschen von Daten des Daten- und/oder Funktionssatzes sowie das Ausführen oder die Initiierung der Ausführung von Funktionen des Daten- und/oder Funktionssatzes zu verstehen.

Zumindest ein Teil des teilnehmerspezifischen Daten- und/oder Funktionssatzes des Teilnehmers A ist hierbei auf einem Netzwerkserver des Netzbetreibers abgespeichert, in diesem Ausführungsbeispiel auf dem Netzwerkserver NETSERV in dem Speicherbereich NSIM1 der Speichereinheit DB. Ein Teil des teilnehmerspezifische Daten- und/oder Funktionssatze des Teilnehmers A ist auf der Karte SIM oder in einem Speicher des Endgerätes TE1 gespeichert. Vorzugsweise ist jedoch der gesamte teilnehmerspezifische Daten- und/oder Funktionssatz des Teilnehmers A auf dem Netzwerkserver NETSERV gespeichert.

Die Steuereinheit CONTR1 kommuniziert nun mit demjenigen Netzwerkserver, der dem Netzbetreiber des Teilnehmers A zugeordnet ist und auf dem zumindest ein Teil des teilnehmerspezifische Daten- und/oder Funktionssatzes des Teilnehmers A abgespeichert ist. Die Kommunikationsadresse dieses Netzwerkservers ist vorzugsweise auf der Karte SIM abgespeichert. Es ist jedoch auch möglich, dass die Steuereinheit CONTR1 diese Kommunikationsadresse selbständig beispielsweise mittels einer Lernprozedur oder mittels Zugriff auf eine Name-Server ermittelt,

Mittels dieser Kommunikationsadresse kommuniziert die Steuereinheit CONTR1 über die Funkfeststation NB, den Funknetz-Kontroller RC und den Router ROUT mit dem Netzwerkserver NETSERV. Bei dieser Kommunikation handelt es sich vorzugsweise um eine paketorientierte Kommunikation.

Die Kommunikation mit dem Netzwerkserver NETSERV kann hierbei in zwei Bereiche unterteilt werden. Zum einen eine Authentisierungs-Kommunikation AUT1 und zum anderen eine Datenaustausch-Kommunikation DAT.

Die Authentisierungs-Kommunikation AUT1 umfasst den Austausch von Nachrichten zwischen der Steuereinheit CONTR1 und der Steuereinheit CONTR2 des Netzwerkservers NETSERV, die im Rahmen einer Authentisierungsprozedur zur Identifizierung und Authentisierung des Teilnehmers A gegenüber dem Netzwerkserver NETSERV ausgetauscht werden. Diese Authentisierungsprozedur kann beispielsweise auf der Verschlüsselung von Zufallszahlen mittels asynchroner Schlüssel oder der Verwendung der digitalen Signatur beruhen. Ein oder mehrere teilnehmerspezifische Kennungen des Teilnehmers A, die auch Schlüssel sein können, werden von der Steuereinheit CONTR1 verwendet, um den Teilnehmer A mittels der Authentisierungsprozedur gegenüber dem Netzwerkserver NETSERV zu identifizieren. Der Nachrichtenaustausch im Rahmen der Authentisierungs-Kommunikation AUT1 kann hierbei selbst verschlüsselt werden.

Die teilnehmerspezifische Kennung oder Kennungen des Teilnehmers A oder ein Teil der teilnehmerspezifischen Kennungen des Teilnehmers A können hierbei auf der Karte SIM abgespeichert sein.

Es ist jedoch auch möglich, dass diese von dem Teilnehmer A über die Bedieneinheit UI der Steuereinheit CONTR1 bekannt gegeben werden.

Weiter ist es möglich, dass die teilnehmerspezifische Kennung oder Kennungen des Teilnehmers A oder ein Teil der teilnehmerspezifischen Kennungen des Teilnehmers A von dem Endgerät TE1 aus biometrischen Daten des Teilnehmers A ermittelt wird.

Bei einer positive Überprüfung der Zugriffsberechtigung des Endgerätes TE1 auf den auf dem Netzwerkserver NETSERV abgespeicherten Daten- und/oder Funktionssatz des Teilnehmers A oder Teil des Daten- und/oder Funktionssatzes des Teilnehmers A gestattet die Steuereinheit CONTR2 den Zugriff auf diesen. Hat die Steuereinheit CONTR2 somit einen Teilnehmer identifiziert, dem einer der Speicherbereiche NSIM1 bis NSIMn zugeordnet ist, und hat die Authentisierung mittels der Authentisierungsprozedur zu einem positiven Ergebnis geführt, so gestattet sie dem Endgerät TE1 den Zugriff auf denjenigen Speicherbereich, der dem identifizierten Teilnehmer zugeordnet ist. Im Falle der Verwendung einer Kennung des Teilnehmers A gestattet sie somit den Zugriff auf den Speicherbereich NSIM1.

Hat die Steuereinheit CONTR2 den Zugriff gestattet, so werden zwischen den Steuereinheiten CONTR1 und CONTR2 Nachrichten im Rahmen der Datenaustausch-Kommunikation DAT ausgetauscht. Mittels dieser Nachrichten greift die Steuereinheit CONTR1 auf den Daten- und/oder Funktionssatz oder den Teil des Daten- und/oder Funktionssatzes des Teilnehmers A zu, der in der Speichereinheit DB des Netzwerkservers NETSERV abgespeichert ist. Die Steuereinheit CONTR1 fordert beispielsweise bei der Datenaustausch-Kommunikation DAT die Steuereinheit CONTR2 auf, Daten oder Funktionen zu lesen und zu übermitteln, zu löschen, mitgeteilte Daten oder Funktionen abzuspeichern oder Funktionen auszuführen.

Hierbei ist es vorteilhaft, dass teilnehmerspezifische Daten- und/oder Funktionen zwischen einem ersten Teil des teilnehmerspezifischen Datenund/oder Funktionssatzes, der auf der Karte SIM abgespeichert ist, und einem zweiten Teil des teilnehmerspezifischen Daten- und/oder Funktionssatzes, der in der Speichereinheit DB des Netzwerkservers NETSERV abgespeichert ist, ausgetauscht werden. Beispielsweise ist es vorteilhaft, häufig benötige Daten oder Funktionen auf der Karte SIM zu speichern und weniger oft verwendete Daten oder Funktionen in die Speichereinheit DB auszulagern.

Eine weitere Möglichkeit besteht darin, auf der Karte SIM keine oder sehr wenige teilnehmerspezifische Daten- und/oder Funktionen zu speichern und nach der Zugriffsgestattung eine Vielzahl von teilnehmerspezifischen Daten- und/oder Funktionen von dem Netzwerkserver NETSERV auf die Karte SIM zu verlagern.

Weiter ist es möglich, dass die Datenaustausch-Kommunikation zwischen den Steuereinheiten CONTR1 und CONTR2 verschlüsselt wird. Dies ist insbesondere vorteilhaft, wenn der Teilnehmer A mittels seines Endgerätes TE4 über das Zugangsnetz AN2 kommuniziert, das von einem Wireless LAN gebildet wird.

Im weiteren kann mittels Verschlüsselungsdaten oder Verschlüsselungsfunktionen, die in dem teilnehmerspezifischen Daten- und/oder Funktionssatz des Teilnehmers A enthalten sind, auch auf vorteilhafte Weise eine Verschlüsselung von Nutzdaten durchgeführt werden, die im Rahmen des von dem Endgerät TE4 bereitgestellten Kommunikationsdienstes über das Zugangsnetz AN2 ausgetauscht werden.

Mittels des teilnehmerspezifischen Daten- und/oder Funktionssatzes identifiziert die Steuereinheit CONTR1 im folgenden das Endgerät gegenüber dem Netzbetreiber als Endgerät des Teilnehmers und stellt im weiteren dem Teilnehmer A teilnehmerindividualisierte Funktionen bereit. Der Zugriff auf Teile des teilnehmerspezifischen Daten- und/oder Funktionssatzes des Teilnehmers A, die in dem Netzwerkserver NETSERV gespeichert sind, erfolgt für diese Funktionen der Steuereinheit CONTR1 vorzugsweise transparent. Dies bedeutet, dass die örtliche Verteilung der Daten des teilnehmerspezifischen Daten- und/oder Funktionssatzes des Teilnehmers A von diesen Funktionen nicht zu beachten ist und ihnen auch nicht bekannt ist.

Es ist hierbei möglich, dass die oben beschriebene Identifizierung gegenüber dem Netzwerkserver NETSERV eine Doppelfunktion hat und ebenfalls das Endgerät gegenüber dem Netzbetreiber als Endgerät des Teilnehmers identifiziert.

Weiter ist es auch möglich, dass die Steuereinheit CONTR1 mittels des teilnehmerspezifischen Daten- und/oder Funktionssatzes das Endgerät gegenüber ein oder mehreren weiteren Netzbetreibern als Endgerät des Teilnehmers identifiziert.

Beispielsweise ist der Netzzugangsserver NAS1 der Netzzugangsserver eines Netzbetreibers ISPO, der einen Netzzugang in das Datennetz IPN bereitstellt, und der Netzzugangsserver NAS2 der Netzzugangsserver eines Netzbetreibers MNOP, der einen Netzzugang in ein Mobilfunknetz, nämlich das Zugangsnetz AN1 bereitstellt.

Mittels in dem teilnehmerspezifischen Daten- und/oder Funktionssatz des Teilnehmers A enthaltenen Daten identifiziert die Steuereinheit CONTR1 das Endgerät gegenüber dem Netzbetreiber MNOP als Endgerät des Teilnehmers A. Hierfür wird eine Authentisierungs-Kommunikation AUTH2 durchgeführt. Anschließend ist es der Steuereinheit CONTR1 möglich, dem Teilnehmer A einen Kommunikationsdienst anzubieten, mittels dem eine Kommunikation KOM1 über das Netz des Netzbetreibers MNOP möglich ist.

Mittels in dem teilnehmerspezifischen Daten- und/oder Funktionssatz des Teilnehmers A enthaltenen Daten identifiziert die Steuereinheit CONTR1 das Endgerät TE1 gegenüber dem Netzbetreiber ISPOP als Endgerät des Teilnehmers A. Hierfür wird eine Authentisierungs-Kommunikation AUTH3 durchgeführt. Anschließend ist es der Steuereinheit CONTR1 möglich, dem Teilnehmer A einen Kommunikationsdienst anzubieten, mittels dem eine Kommunikation KOM2 über das Netz des Netzbetreibers ISPOP möglich ist.

Es ist auch möglich, dass die Authentisierungs-Kommunikationen AUTH2 und AUTH3 zwischen der Steuereinheit CONTR2 und den Netzzugangsservern NAS1 und NAS2 durchgeführt werden.

Neben dem Endgerät TE1 können auch die Endgeräte TE2 bis TE5 sich gegenüber dem Netzwerkserver NETSERV in gleicher Weise wie nach Fig. 2 beschrieben als Endgeräte des Teilnehmers A identifizieren. Verschiedenartige Endgeräte können somit über verschiedenartige Zugangsnetze auf ein und denselben Netzwerkserver zugreifen, auf dem der gesamte teilnehmerspezifische Daten- und/oder Funktionssatze des Teilnehmers A abgespeichert sein kann. Es wird somit mit dem erfindungsgemäßen Verfahren eine SIM Lock über verschiedene Netze hinweg und mittels verschiedener Endgeräte ermöglicht.

## Patentansprüche

1. Verfahren zur Unterstützung der Kommunikation eines Endgerätes (TE1 bis TE5) über ein Kommunikationsnetz (TKN), das über ein oder mehrere verschiedenartige Zugangsnetze (AN1, AN2) verfügt, wobei bei dem Verfahren das Endgerät (TE1 bis TE5) einem Teilnehmer (A) eines Netzbetreibers einen Kommunikationsdienst bereitstellt, das Endgerät (TE1 bis TE5) auf einen teilnehmerspezifischen Daten- und/oder Funktionssatze (SIM, NSIM1) des Teilnehmers (A) zugreift, und das Endgerät (TE1 bis TE5) sich mittels des teilnehmerspezifischen Daten- und/oder Funktionssatzes (SIM, NSIM1) gegenüber dem Netzbetreiber als Endgerät des Teilnehmers identifiziert und dem Teilnehmer (A) teilnehmerindividualisierte Funktionen bereitstellt,
**dadurch gekennzeichnet, dass** der teilnehmerspezifische Daten- und/oder Funktionssatz (SIM, NSIM1) zumindest zum Teil in einem Netzwerkserver (NETSERV) des Netzbetreibers abgespeichert wird, dass das Endgerät (TE1 bis TE5) auf den auf dem Netzwerkserver (NETSERV) abgespeicherten Daten- und/oder Funktionssatz (NSIM1) des Teilnehmers (A) oder Teil des Daten- und/oder Funktionssatze (NSIM1) des Teilnehmers (A) zugreift und dass der Netzwerkserver (NETSERV) die Zugriffsberechtigung eines Endgerätes (TE1 bis TE5) auf den auf dem Netzwerkserver abgespeicherten Daten- und/oder Funktionssatze (NSIM1) des Teilnehmers (A) oder Teil des Daten- und/oder Funktionssatze (NSIM1) des Teilnehmers (A) überprüft, bevor er den Zugriff auf den Daten- und/oder Funktionssatz (NSIM1) oder den Teil des Daten- und/oder Funktionssatzes (NSIM1) des Teilnehmers (A) gestattet.

2. Verfahren nach Anspruch 1, **dadurch gekennzeichnet, dass** ein erster Teil des teilnehmerspezifischen Daten- und/oder Funktionssatzes (SIM, NSIM1) auf einer Karte (SIM) abgespeichert wird und ein zweiter Teil des teilnehmerspezifischen Daten- und/oder Funktionssatzes (NSIM1) in dem Netzwerkserver (NETSERV) abgespeichert wird.

3. Verfahren nach Anspruch 2, **dadurch gekennzeichnet, dass** teilnehmerspezifische Daten- und/oder Funktionen zwischen dem ersten (SIM) und dem zweiten Teil (NSIM1) des teilnehmerspezifischen Datenund/oder Funktionssatzes ausgetauscht werden.

4. Verfahren nach Anspruch 1, **dadurch gekennzeichnet, dass** teilnehmerspezifische Daten- und/oder Funktionen von dem Netzwerkserver (NETSERV) in das Endgerät (TE1) geladen werden.

5. Verfahren nach Anspruch 1, **dadurch gekennzeichnet, dass** der Teilnehmer (A) gegenüber dem Netzwerkserver (NETSERV) von dem Endgerät (TE1) mittels einer Authentisierungsprozedur identifiziert wird, die auf einer teilnehmerspezifischen Kennung des Teilnehmers beruht.

6. Verfahren nach Anspruch 5, **dadurch gekennzeichnet, dass** die teilnehmerspezifische Kennung des Teilnehmers auf einer Karte (SIM) abgespeichert wird.

7. Verfahren nach Anspruch 5, **dadurch gekennzeichnet, dass** die teilnehmerspezifische Kennung des Teilnehmers von dem Endgerät (TE1) aus biometrischen Daten des Teilnehmers ermittelt wird.

8. Verfahren nach Anspruch 1, **dadurch gekennzeichnet, dass** ein erstes Zugangsnetz (AN1) von einem Mobilfunknetz und ein zweites Zugangsnetz (AN2) von einem Wireless-LAN gebildet werden.

9. Netzwerkserver (NETSERV) eines Netzbetreibers zur Unterstützung der Kommunikation eines Endgerätes (TE1 bis TE5) über ein Kommunikationsnetz (TKN), das über ein oder mehrere verschiedenartige Zugangsnetze (AN1, AN2) verfügt,
**dadurch gekennzeichnet, dass** der Netzwerkserver (NETSERV) mit einer Speichereinheit (DB) versehen ist, in der zumindest ein Teil eines teilnehmerspezifischen Daten- und/oder Funktionssatzed (SIM, NSIM1) eines Teilnehmers (A) des Netzbetreibers abgespeichert ist, wobei der teilnehmerspezifische Daten- und/oder Funktionssatz (SIM, NSIM1) dazu dient, Endgeräte (TE1 bis TE5) gegenüber dem Netzbetreiber als Endgerät des Teilnehmers (A) zu identifizieren und dem Teilnehmer (A) teilnehmerindividualisierte Funktionen bereitzustellen, dass der Netzwerkserver (NETSERV) weiter mit einer Steuereinheit (CONTR2) versehen ist, die so ausgestaltet ist, dass sie die Zugriffsberechtigung eines Endgerätes (TE1 bis TE5) auf den auf dem Netzwerkserver abgespeicherten Daten- und/oder Funktionssatz (NSIM1) des Teilnehmers (A) oder Teil des Daten- und/oder Funktionssatzes (NSIM1) des Teilnehmers (A) überprüft und nur bei positiver Überprüfung den Zugriff auf den Daten- und/oder Funktionssatz (NSIM1) oder den Teil des Daten- und/oder Funktionssatzes (NSIM1) des Teilnehmers (A) gestattet.

10. Netzwerkserver (NETSERV) nach Anspruch 9, **dadurch gekennzeichnet, dass** in dem Daten- und/oder Funktionssatz (NSIM1) des Teilnehmers (A) oder Teil des Daten- und/oder Funktionssatzes (NSIM1) des Teilnehmers (A), der in der Speichereinheit (DB) abgespeichert ist, teilnehmerspezifische Adressen und/oder Telefonnummern enthalten sind.

11. Netzwerkserver (NETSERV) nach Anspruch 9, **dadurch gekennzeichnet, dass** in dem Daten- und/oder Funktionssatz (NSIM1) des Teilnehmers (A) oder Teil des Daten- und/oder Funktionssatzes (NSIM1) des Teilnehmers (A), der in der Speichereinheit (DB) abgespeichert ist, teilnehmerspezifische SMS Inhalte und Funktionen zur SMS Steuerung oder Verwaltung enthalten sind.

12. Netzwerkserver (NETSERV) nach Anspruch 9, **dadurch gekennzeichnet, dass** in dem Daten- und/oder Funktionssatz (NSIM1) des Teilnehmers (A) oder Teil des Daten- und/oder Funktionssatzes (NSIM1) des Teilnehmers (A), der in der Speichereinheit (DB) abgespeichert ist, eine teilnehmerspezifische Datenbank enthalten ist.

13. Netzwerkserver (NETSERV) nach Anspruch 9, **dadurch gekennzeichnet, dass** in dem Daten- und/oder Funktionssatz (NSIM1) des Teilnehmers (A) oder Teil des Daten- und/oder Funktionssatzes (NSIM1) des Teilnehmers (A), der in der Speichereinheit (DB) abgespeichert ist, teilnehmerspezifische Bookmarks enthalten sind.

14. Netzwerkserver (NETSERV) nach Anspruch 9, **dadurch gekennzeichnet, dass** in dem Daten- und/oder Funktionssatz (NSIM1) des Teilnehmers (A) oder Teil des Daten- und/oder Funktionssatzes (NSIM1) des Teilnehmers (A), der in der Speichereinheit (DB) abgespeichert ist, DRM-Funktionen enthalten sind.

15. Netzwerkserver (NETSERV) nach Anspruch 9, **dadurch gekennzeichnet, dass** in dem Daten- und/oder Funktionssatz (NSIM1) des Teilnehmers (A) oder Teil des Daten- und/oder Funktionssatzes (NSIM1) des Teilnehmers (A), der in der Speichereinheit (DB) abgespeichert ist, Rufnummernportabilitäts-Informationen enthalten sind.

16. Netzwerkserver (NETSERV) nach Anspruch 9, **dadurch gekennzeichnet, dass** in dem Daten- und/oder Funktionssatz (NSIM1) des Teilnehmers (A) oder Teil des Daten- und/oder Funktionssatzes (NSIM1) des Teilnehmers (A), der in der Speichereinheit (DB) abgespeichert ist, Funktionen zur Sprachübersetzung enthalten sind.

17. Netzwerkserver (NETSERV) nach Anspruch 9, **dadurch gekennzeichnet, dass** in dem Daten- und/oder Funktionssatz (NSIM1) des Teilnehmers (A) oder Teil des Daten- und/oder Funktionssatzes (NSIM1) des Teilnehmers (A), der in der Speichereinheit (DB) abgespeichert ist, Informationen zur Authentisierung des Teilnehmers gegenüber einem oder mehreren Netzbetreibern enthalten.

18. Netzwerkserver (NETSERV) nach Anspruch 9, **dadurch gekennzeichnet, dass** die Steuereinheit (CONTR2) weiter so ausgestaltet ist, dass sie die Kommunikation mit dem Endgerät (TE1) verschlüsselt.

19. Netzwerkserver (NETSERV) nach Anspruch 9, **dadurch gekennzeichnet, dass** die Steuereinheit (CONTR2) weiter so ausgestaltet ist, dass sie eine Authentisierung des Teilnehmers gegenüber ein oder mehreren Zugangsnetzen durchführt.

20. Endgerät (TE1) zur Kommunikation über ein Kommunikationsnetz (TKN), das über ein oder mehrere verschiedenartige Zugangsnetze (AN1, AN2) verfügt, wobei das Endgerät (TE1) mit einer Steuereinheit (CONTR1) versehen ist, die so ausgestaltet ist, dass sie einem Teilnehmer (A) eines Netzbetreibers über eine Bedieneinheit (UI) einen Kommunikationsdienst bereitstellt und dass sie auf einen teilnehmerspezifischen Daten- und/oder Funktionssatz (SIM, NSIM1) des Teilnehmers (A) zugreift und sich mittels des teilnehmerspezifischen Daten- und/oder Funktionssatzes (SIM, NSIM1) gegenüber dem Netzbetreiber als Endgerät des Teilnehmers (A) identifiziert und dem Teilnehmer (A) teilnehmerindividualisierte Funktionen bereitstellt, **dadurch gekennzeichnet, dass** die Steuereinheit (CONTR1) weiter so ausgestaltet ist, dass sie mit einem Netzwerkserver (NETSERV) des Netzbetreibers kommuniziert, auf dem zumindest ein Teil des teilnehmerspezifischen Daten- und/oder Funktionssatzes (SIM, NSIM1) des Teilnehmers (A) abgespeichert ist, und dass die Steuereinheit (CONTR1) weiter so ausgestaltet ist, dass sie nach positiver Überprüfung der Zugriffsberechtigung des Endgerätes durch den Netzwerkserver (NETSERV) auf den Daten- und/oder Funktionssatz (NSIM1) oder den Teil des Datenund/oder Funktionssatzes (NSIM1) des Teilnehmers (A) zugreift, der auf dem Netzwerkserver (NETSERV) des Netzbetreibers abgespeichert ist.
